# EUROPEAN PATENT APPLICATION

(11) **EP 1 630 465 A1**
(43) Date of publication of application: **01.03.2006**
(21) Application number: 04104078.3
(22) Date of filing: 25.08.2004
(51) Int. Cl.: F16L 9/08, F16L 9/04, F16L 58/06

(54) **Concertina reinforcement of concrete coatings for pipes**

(71) Applicant: Betafence Holding NV, 8550 Zwevegem (BE)
(72) Inventor: Claeys, Peter, 9881, BELLEM (BE)
(74) Representative: Ostyn, Frans

(57) **Abstract**

A reinforcement of a coating of a cylindrical object, such as a steel pipe (10), takes the form of a wire construction (12). The wire construction (12) comprises a spiral wound wire. The spiral wound wire comprises different turns (14), which are connected to each other in a way to allow the wire construction to form diamond meshes when the wire construction is extended to cover the cylindrical object (10).

## Description

### Field of the invention.

The present invention relates to a reinforcement for a coating of a cylindrical object. The invention also relates to a cylindrical object with a reinforced coating and to a method of reinforcing a coating of a cylindrical object. The cylindrical object may be a pipe and the coating may be concrete.

### Backaround of the invention.

Reinforcements for concrete coatings around steel pipes are known in the art.

As a matter of example, three-dimensional rebar cages comprising various steel wires or steel rods welded together to form a cage around the pipe were commonly used in the years 1970. This three-dimensional rebar construction had the drawback that the construction was made in situ around the pipe. This was a time-consuming process.

US-A-4,134,197 provides a solution to the time consuming character in the form of continuous reinforcing strips. The strips have longitudinal and transverse wires. These strips are helically wound around a pipe in various turns. The winding occurs simultaneously with the spraying and / or compression of concrete onto the pipe. Adjacent turns of the strip may overlap. These strips are marketed by Bekaert Fencing NV under the name ARMAPIPE (Trademark) and are widely used for concrete pipe reinforcement.
In case the adjacent turns of a strip overlap, the concentration of the steel over the length of the pipe is not homogeneous, since the regions of overlapping have more steel than the regions where no overlapping occurs. GB-A-2 254 629 provides a reinforcing strip with a reduced population of longitudinal wires in the region of overlapping in order to obtain a substantially even spacing between successive longitudinal wires of the strip along the length of the pipe. This substantially even spacing, however, requires an accurate winding of the strips around the pipe.
The reinforcing strips of US-A-4,134,197 and GB-A-2 254 629 allow for a continuous reinforcing of the concrete coating around the pipe. However, the pipe is not endless. The strip is unwound from a big supply roll of strip material and is wound helically around the pipe during the spraying of concrete over the length of the pipe. Coming at the end of the pipe, the spraying stops and the strip is cut from its supply roll. The leading ends of the supply roll are then directed towards another pipe length to start unwinding and spraying again. As the strip comprises several steel wires with a diameter of more than 1.0 mm, the cutting of the strip may take some time.

### Summary of the invention.

It is an object of the present invention to avoid the drawbacks of the prior art.
It is also an object of the present invention to further increase the efficiency of the process of providing a reinforcement for the coating of a cylindrical object.
It is another object of the present invention to avoid the cutting of the reinforcement.
It is an additional object of the present invention to avoid the need for unwinding equipment for the reinforcement.
It is yet another object of the present invention to provide for a "cylinder per cylinder" reinforcement of the coating.

According to a first aspect of the present invention, there is provided a reinforcement of a coating of a cylindrical object. The cylindrical object may be a pipe, such as a steel pipe. The coating may be concrete. The reinforcement takes the form of a wire construction. The wire construction comprises a spiral wound wire with different turns or convolutions. Adjacent turns are connected to each other in a way to allow the wire construction to form diamond meshes when the wire construction is extended in a concertina-like way to cover the cylindrical object.
The wire construction can be made so as to cover - in extended form - exactly one cylinder or pipe length. This is the cylinder per cylinder reinforcement. As a result, the cutting of the strips as in US-A-4,134,197 and GB-A-2 254 629 is avoided.

According to a second aspect of the present invention, there is provided a cylindrical object that comprises a coating. The coating comprises a reinforcement in the form of a wire construction according to the first aspect of the present invention.
A cylindrical object may comprise one, two or more wire constructions as reinforcement for its coating. If there is more than one wire construction, the wire constructions may be positioned in various layers, one above the other.

According to a third aspect of the present invention, there is provided a method of reinforcing a coating of a cylindrical object with the following steps:
a) providing a cylindrical object;
b) providing a wire construction with different turns, which are connected to each other;
c) pushing the wire construction over the cylindrical object;
d) extending said wire construction in a concertina-like way to cover the cylindrical object over its whole length.
A coating is then provided over the wire construction.

The cylindrical objects may be steel pipes for underwater use, for example for use as oil pipelines. A heavy coating of concrete is applied to the steel pipes to counteract their buoyancy. These heavy concrete coatings require reinforcement to enable the coated pipes to withstand forces they encounter during their use.

### Brief description of the drawings.

The invention will now be described into more detail with reference to the accompanying drawings wherein
- FIGURE 1 illustrates how a reinforcement according to the invention is pushed over a pipe;
- FIGURE 2 shows a longitudinal section of a pipe with a reinforced coating;
- FIGURE 3 shows part of a longitudinal section of a pipe with a double reinforcement in the coating.

### Description of the preferred embodiments of the invention.

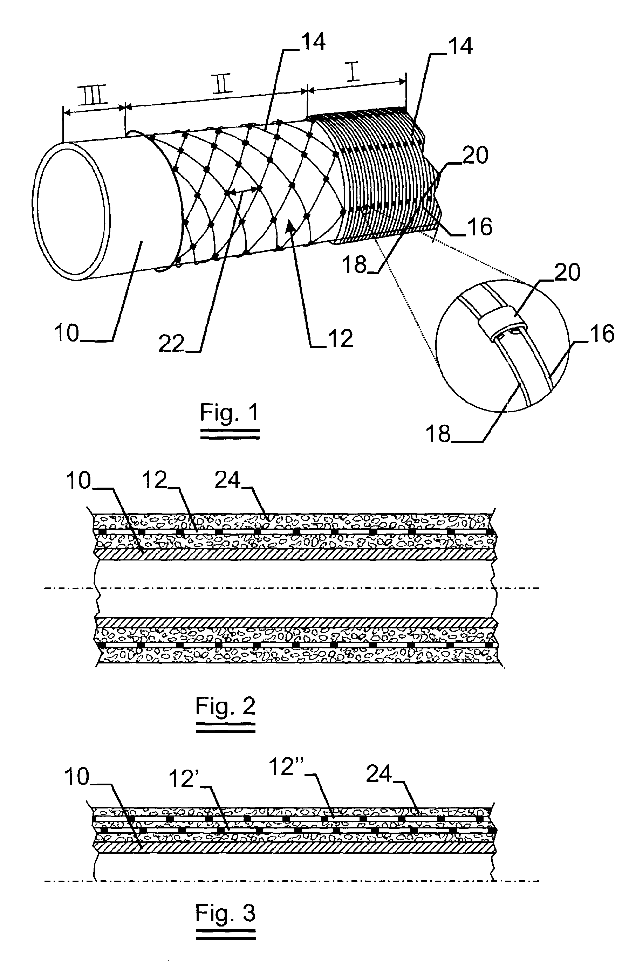

FIGURE 1 illustrates the various aspects of the present invention. A coating (not shown) must be provided on a steel pipe 10. A wire construction 12 is being pushed over the pipe 10. The wire construction 12 is a spiral or helically wound wire comprising various turns or convolutions 14. The diameter of the turns is somewhat greater than the external diameter of the pipe 12 so that the wire construction 12 fits over the pipe 10. Adjacent turns 16, 18 of the wire construction 12 are connected to each other by means of flat stainless steel clips 20.
The wire itself may be a low carbon steel wire. The steel wire may be coated with a zinc or another coating providing corrosion resistance to the wire or improving the adhesion of the wire with the ultimate coating over the pipe. A suitable diameter range of the wire is between 2.0 mm and 7.0 mm, e.g. between 3.0 mm and 6.0 mm.

Instead of making use of stainless steel clips 20 for connecting the adjacent turns to each other, following alternatives are also possible. A first alternative may comprise the use of short lengths of low carbon steel wire. The length of wire envelops the two adjacent wire turns and both ends of the length of wire are twisted.
A second alternative may comprise the use of an open ring, e.g. made of a metal wire-like material, which envelops the two adjacent wire turns and which is then deformed to form a closed ring.

The wire construction 12 is handled and supplied in a compact wound way. In order to reinforce the coating of the pipe 10, the wire construction 12 is pushed over the pipe 10 in its compact configuration. Therefore the diameter of the turns of the wire construction must be sufficiently greater than the external diameter of the pipe. It must be taken into account that extending the wire construction 12 causes the diameter of the turns to decrease.

After pushing the wire construction 12 over the pipe in its compact form, the wire construction 12 is extended over the length of the pipe 10. FIGURE 1 illustrates this process by clearly showing three different zones: Zone I, zone II and zone III. In zone I, the wire construction 12 is present over the pipe 10 in its compact configuration. In zone II the wire configuration is being extended in a concertina-like way to form diamond meshes. The width 22 of those diamond meshes in extended configuration may range from 20 mm to 40 mm, e.g. from 25 mm to 35 mm. Zone III is the zone, which has not yet been covered by means of the wire construction 12.
After covering the whole length of the pipe 10, concrete may be sprayed on the wire configuration 12 and the pipe 10.
The number of turns in the wire construction 12 and the distance between two successive clips 20 determine the length of the pipe to be reinforced and the amount of steel present in the coating around the pipe 10.

FIGURE 2 shows a longitudinal section of a steel pipe 10, with a concrete coating 24 reinforced by means of a wire construction 12.

Referring to FIGURE 3, two wire constructions 12' and 12" reinforce various layers of concrete coatings 24 applied one above the other around the steel pipe 10.

Advantages of the invention are that there is no loss of reinforcing material and no loss of time. The wire construction 12 can be adapted in advance to the length of the pipe 10.

The invention is not necessarily restricted to steel pipes. Pipes out of a thermoplastic or thermo harder material may also be provided with a reinforced coating.

## Claims

1. A reinforcement of a coating of a cylindrical object, said reinforcement taking the form of a wire construction, said wire construction comprising a spiral wound wire, said spiral wound wire comprising different turns, adjacent turns being connected to each other in a way to allow the wire construction to form diamond meshes when the wire construction is extended to cover the cylindrical object.

2. A reinforcement according to claim 1, wherein said cylindrical object is a pipe.

3. A reinforcement according to any one of the preceding claims, wherein said coating is concrete.

4. A cylindrical object comprising a coating, said coating comprising a reinforcement according to any one of the preceding claims.

5. A cylindrical object according to claim 4, wherein said coating comprises more than one reinforcement according to any one of claims 1 to 3.

6. A method of reinforcing a coating of a cylindrical object, said method comprising the following steps:
a) providing a cylindrical object;
b) providing a wire construction with different turns, which are connected to each other;
c) pushing said wire construction over said cylindrical object;
d) extending said wire construction to cover said cylindrical object over its whole length.

7. A method according to claim 6, said method further comprising the step of providing a coating over said wire construction.
